# EUROPEAN PATENT SPECIFICATION

(11) **EP 3 236 105 B1**
(45) Date of publication and mention of the grant of the patent: **07.12.2022**
(21) Application number: 17161981.0
(22) Date of filing: 21.03.2017
(51) Int. Cl.: F16F 9/32, F16F 9/18

(54) **SHOCK ABSORBER**
STOSSDÄMPFER
AMORTISSEUR DE CHOCS

(30) Priority: 31.03.2016 JP 2016073440
(43) Date of publication of application: 25.10.2017
(73) Proprietor: Hitachi Astemo, Ltd., Ibaraki 312-8503 (JP)
(72) Inventor: MATSUMOTO, Koji, Fukuroi-shi, Shizuoka, 437-1194 (JP)
(74) Representative: Nordmeyer, Philipp Werner

(56) References cited:
- EP-A2- 2 270 355
- EP-A2- 2 899 110
- WO-A1-2015/093535
- JP-A- 2010 101 422
- US-A1- 2010 018 818

## Description

### CROSS-REFERENCE TO RELATED APPLICATION(S)

This application claims priority from Japanese Patent Application No. 2016-073440 filed on March 31, 2016.

### BACKGROUND

### 1. Field of the Invention

The present invention relates to a shock absorber.

### 2. Description of the Related Art

A hydraulic shock absorber for a motorcycle includes a cylinder in which oil is sealed, a piston provided so as to be slidable in the cylinder, a rod connected to the piston so as to extend outside the cylinder, and a damping force generator that controls flow of the oil occurring when the piston slides in the cylinder to generate damping force. Such a hydraulic shock absorber is provided between a vehicle body and a wheel of the motorcycle in a state in which the cylinder is connected to a wheel side or a vehicle body side and the rod is connected to the vehicle body side or the wheel side.

JP-2014-069640-A discloses a hydraulic shock absorber including a twin-tube cylinder having an outer tube and an inner tube provided on an inner side of the outer tube with a gap formed between the outer tube and the inner tube. In such a hydraulic shock absorber, a piston is provided on the inner side of the inner tube. Moreover, a communication port that communicates with an annular passage formed in the gap between the outer tube and the inner tube is formed in the inner tube on a side of the piston on which a piston rod is disposed. Moreover, a damping force generating unit communicates with a compression-side oil chamber in the inner tube of the cylinder through a compression-side communication path. Furthermore, the damping force generating unit communicates with an extension-side oil chamber in the inner tube of the cylinder through the communication port, the annular passage, and an extension-side communication path.

Here, in this hydraulic shock absorber, the damping force generating unit is provided in a holding member that holds the outer tube and the inner tube, and the compression-side communication path and the extension-side communication path are formed in the holding member.

In the hydraulic shock absorber having such a configuration, the piston slides in the cylinder when the wheel moves up and down in relation to the vehicle body during traveling of the motorcycle. When the piston moves to a compression side in the cylinder, oil compressed by the piston flows from the compression-side oil chamber into the compression-side communication path, and a passage is narrowed by a compression-side valve provided in the damping force generating unit whereby damping force is generated. Moreover, when the piston moves to an extension side in the cylinder, the oil flows from the extension-side oil chamber into the extension-side communication path through the communication port and the annular passage, and the passage is narrowed by an extension-side valve provided in the damping force generating unit whereby the damping force is exhibited.

EP 2 899 110 A2 describes a front fork arranged between a vehicle body and wheel of a motorcycle. JP 2010-101422 A describes a shock absorber which allows adjusting the damping force.

In US 2010/018818 A1, a pressurized, damping medium-filled shock absorber comprising a solid main piston, impervious to damping medium, fixed to a first part of a piston rod. The main piston divides the damping cylinder into a first and a second damping chamber. A pressurization reservoir, comprising a damping medium-filled reserve chamber is connected to the first fixing element. Two separate, adjustable valves arranged in parallel are restricting a damping medium flow between the damping chambers.

### SUMMARY

For example, since a motorcycle for competition such as motocross travels on an uneven ground with jumping and landing on occasion, wheels are displaced at a high speed in relation to the vehicle body when compared to traveling on an even ground such as an asphalt-paved road. When such a high-speed displacement is input to a shock absorber, a piston moves at a high speed in a cylinder, and oil flows at a high flow speed. As a result, high passage resistance is generated in a portion other than a damping force generating unit, in which damping force is not generated at a low flow speed of a normal operation range (for example, a narrowed portion of a passage such as a compression-side communication path and an extension-side communication path). As a result, the shock absorber may be unable to exhibit its original damping characteristics. Due to this, it is preferable to ensure a large cross-sectional area of the passage, through which the oil flows such as the compression-side communication path and the extension-side communication path, as much as possible.

However, in a shock absorber which has a twin-tube structure including an outer tube and an inner tube and in which a damping force generating unit is provided on an outer side of the outer tube and the inner tube, a communication hole through which an extension-side communication path and an annular passage formed in a gap between the outer tube and the inner tube communicate with each other is formed in the outer tube. In order to increase a cross-sectional area of a portion in which the extension-side communication path and the annular passage communicate with each other, it is necessary to enlarge the communication hole formed in the outer tube. However, since strength of the outer tube decreases when the communication hole is enlarged, it is difficult to ensure the damping characteristics of the shock absorber having the twin-tube structure when the oil flows at the high flow speed.

One object of the present invention is to provide a shock absorber capable of reliably exhibiting the damping characteristics even when the oil flows at the high flow speed.

A shock absorber according to the invention is defined by the features of claim 1. Preferable embodiments are defined in the dependent claims as well as the following description. The shock absorber includes: a cylinder which has an outer tube and an inner tube provided on an inner side of the outer tube with a gap formed therebetween in a radial direction, and in which oil is sealed; a piston rod which has one end inserted into the cylinder and the other end extended outside the cylinder; a piston which is connected to the one end of the piston rod, which is provided in the inner tube so as to be slidable along a central axis direction of the inner tube, and which partitions an inner space of the inner tube into a rod-side oil chamber on a same side as the piston rod and a piston-side oil chamber on an opposite side to the piston rod; a damping force generating unit which controls flow of the oil occurring when the piston slides in the inner tube according to displacement of the piston rod, to generate damping force; and a holding member which is provided on an opposite side to the piston rod in relation to the piston, and which holds the outer tube and the inner tube such that an end of the outer tube close to the one end of the piston rod is positioned closer to a side on which the piston rod is disposed than a corresponding end of the inner tube. The holding member includes: a damper housing portion that houses the damping force generating unit; a first communication path through which an inner side of the inner tube and the damper housing portion communicate with each other; a second communication path through which the gap and the damper housing portion communicate with each other; and a passage opening which is formed on an opposite side to the piston rod in relation to the end of the outer tube, and through which the second communication path and the gap communicate with each other.

As described above, the holding member holds the outer tube and the inner tube in a state in which the end of the outer tube is positioned closer to the side on which the piston rod is disposed than the end of the inner tube. In this way, it is possible to form the passage opening that communicates with the second communication path in the holding member on the opposite side to the piston rod in relation to the end of the outer tube so as to have a large opening area. Therefore, it is possible to suppress an increase in passage resistance of the passage opening.

According to the shock absorber according to the present invention, it is possible to reliably exhibit its original damping characteristics even when the oil flows at the high flow speed.

### BRIEF DESCRIPTION OF THE DRAWINGS

FIG. 1 is a front view illustrating an entire configuration of a shock absorber according to an embodiment;
FIG. 2 is a side view of the shock absorber when seen from a different angle;
FIG. 3 is a cross-sectional view illustrating the entire configuration of the shock absorber;
FIG. 4 is an enlarged cross-sectional view of the shock absorber illustrated in FIG. 3;
FIG. 5 is a cross-sectional view illustrating a damping force generator provided in the shock absorber; and
FIG. 6 is a diagram schematically illustrating a configuration of the shock absorber.

### DETAILED DESCRIPTION

Hereinafter, an embodiment for implementing a shock absorber will be described with reference to accompanying drawings. However, the present invention is not limited to this embodiment.

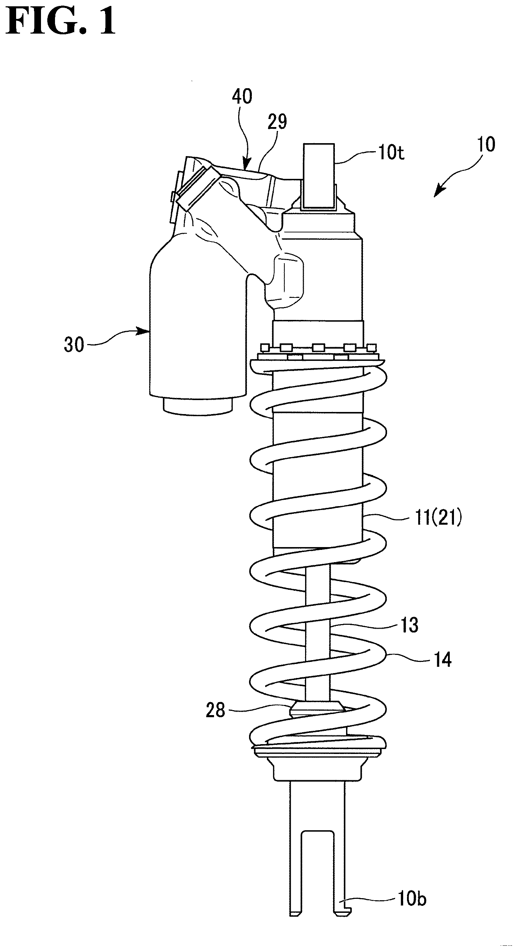

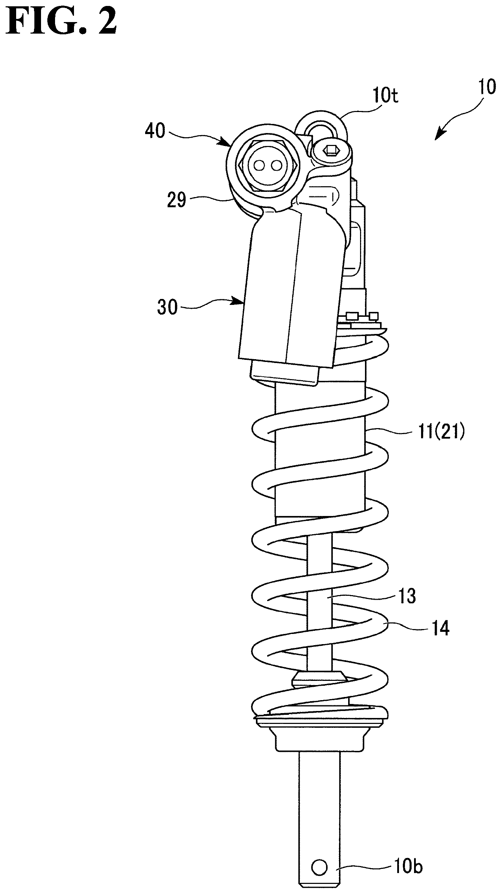

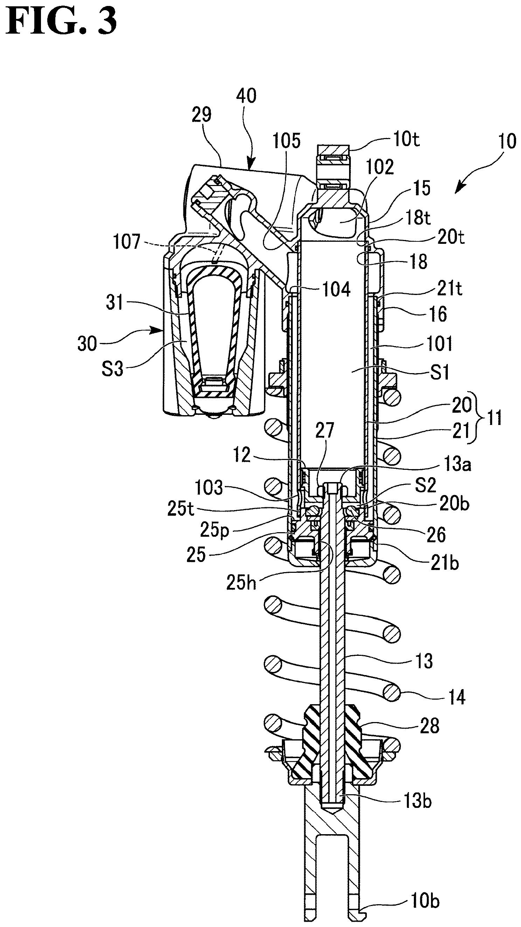

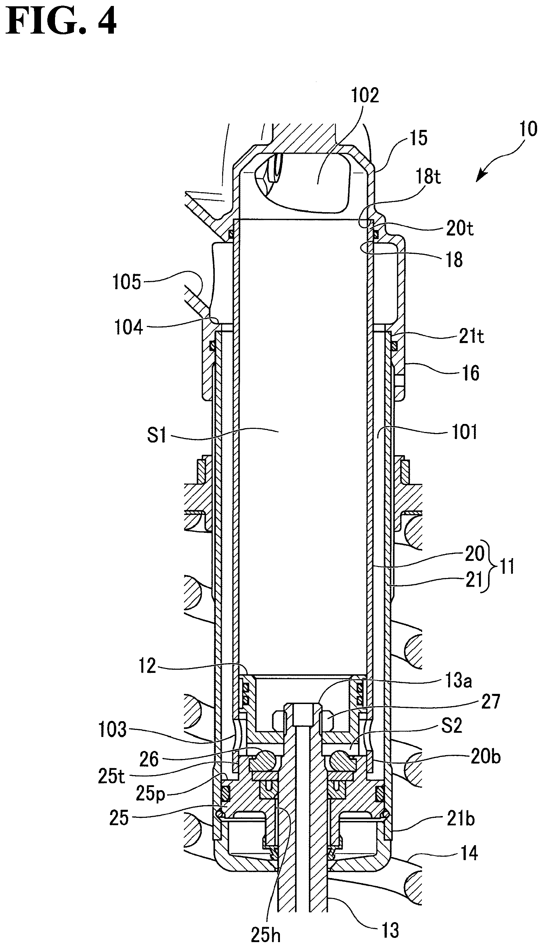

FIG. 1 is a front view illustrating an entire configuration of the shock absorber according to the embodiment. FIG. 2 is a side view of the shock absorber when seen from a different angle. FIG. 3 is a cross-sectional view illustrating the entire configuration of the shock absorber. FIG. 4 is an enlarged cross-sectional view of the shock absorber illustrated in FIG. 3.

### (Shock Absorber)

As illustrated in FIGS. 1 to 3, a shock absorber 10 is provided between a vehicle body of a motorcycle and a rear wheel supporting portion that supports a rear wheel, for example, so as to absorb impact or vibration input from the rear wheel. In the following description, the shock absorber 10 extends in an up-down direction, for example, a vehicle body-side attachment member 10t provided at an upper end of the shock absorber 10 is connected to a vehicle body side, and a vehicle shaft-side attachment member 10b provided at a lower end of the shock absorber 10 is connected to a rear wheel side. However, the present invention does not exclude a case in which the shock absorber 10 is provided so as to extend in a lateral direction (approximately a horizontal direction), for example.

The shock absorber 10 includes a cylinder 11, a piston 12 (see FIG. 3), a piston rod 13, a reservoir 30, a damping force generator 40, and a spring 14.

As illustrated in FIGS. 3 and 4, the cylinder 11 includes an inner tube 20 and an outer tube 21 that form a concentric double-wall tube. The inner tube 20 and the outer tube 21 are formed of a cold-worked material formed by cold working such as drawing, extrusion, or forging.

An outer diameter of the inner tube 20 is formed to be a predetermined size smaller than an inner diameter of the outer tube 21. In this way, a cylindrical annular passage 101 is formed between the inner tube 20 and the outer tube 21.

A damper case (a holding member) 15 in which the vehicle body-side attachment member 10t is provided is disposed on an upper end side of the shock absorber 10. A cylindrical outer tube holding portion 16 extending toward the cylinder 11 is provided in the damper case 15. The outer tube 21 is held in a state in which an upper end 21t of the outer tube 21 is inserted into the outer tube holding portion 16.

The damper case 15 is preferably formed of a cold-worked metallic material formed by forging or the like in order to reduce weight while providing necessary strength.

As illustrated in FIG. 4, the inner tube 20 is held in a state in which an upper end 20t of the inner tube 20 extends above the upper end 21t of the outer tube 21 and is inserted into an inner tube holding recess 18 formed in the damper case 15. The inner tube holding recess 18 has such an inner diameter that the upper end 20t of the inner tube 20 is inserted into the inner tube holding recess 18. The inner tube holding recess 18 has a contact surface 18t with which the upper end 20t of the inner tube 20 contacts, and fixes the inner tube 20 in a state in which movement toward the upper side (toward the vehicle body-side attachment member 10t) of the inner tube 20 is restrained.

The upper end 21t of the outer tube 21 is positioned closer to the piston rod 13 than the upper end 20t of the inner tube 20.

Moreover, the outer tube 21 is formed so that a lower end 21b thereof protrudes below a lower end 20b of the inner tube 20 to a predetermined extent.

A rod guide 25 is provided on an inner side of the lower end 21b of the outer tube 21. The rod guide 25 includes a plate portion 25p that makes contact with an inner circumferential surface of the outer tube 21 to block the inner side of the lower end 21b of the outer tube 21 and a tubular portion 25t that extends toward the damper case 15 from an upper surface of the plate portion 25p. The plate portion 25p and the tubular portion 25t are integrated with each other.

The tubular portion 25t of the rod guide 25 is inserted into the lower end 20b of the inner tube 20 to thereby hold the lower end 20b of the inner tube 20 so as to be immovable in a direction crossing a central axis thereof.

The plate portion 25p of the rod guide 25 blocks the annular passage 101 between the outer tube 21 and the inner tube 20 at the lower end 20b of the inner tube 20.

Moreover, the rod guide 25 has an insertion hole 25h which passes through the plate portion 25p and the tubular portion 25t and through which the piston rod 13 is inserted so that the piston rod 13 is guided so as to be slidable in a central axis direction thereof.

Furthermore, a rebound rubber 26, which absorbs impact of the piston 12 colliding, is provided on an inner side of the tubular portion 25t of the rod guide 25.

The piston 12 is connected to an upper end (one end) 13a of the piston rod 13 by a nut 27. The piston 12 is provided on the inner side of the inner tube 20 of the cylinder 11 together with the piston rod 13 so as to be slidable along the central axis direction (the up-down direction) of the inner tube 20.

The piston 12 partitions an inner space of the inner tube 20 of the cylinder 11 into a piston-side oil chamber S1 formed closer to the damper case 15 on an opposite side to the piston rod 13 and a rod-side oil chamber S2 formed on a same side as the piston rod 13.

As illustrated in FIG. 3, the piston rod 13 of which the upper end 13a is connected to the piston 12 extends downward along the central axis direction of the inner tube 20, passes through the rod guide 25, and protrudes outside the cylinder 11. The vehicle shaft-side attachment member 10b is provided at the lower end (the other end) 13b of the piston rod 13. A bump rubber 28 for preventing bottoming of the shock absorber 10 is provided on the vehicle shaft-side attachment member 10b on a side facing the cylinder 11 in a state of being inserted in the piston rod 13.

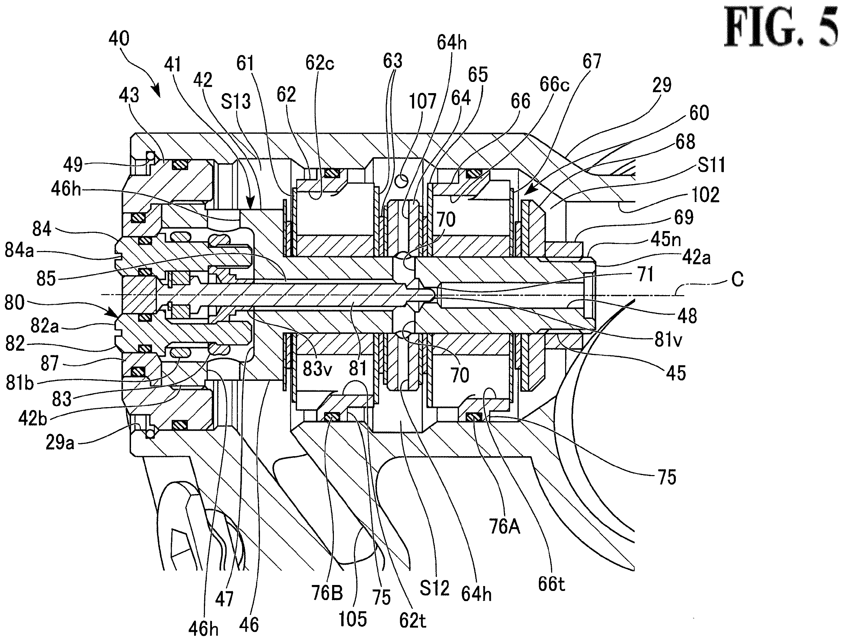

A compression-side communication path (a first communication path) 102 having one open end is formed in the damper case 15 at a position facing an opening of the upper end 20t of the inner tube 20. The compression-side communication path 102 allows the piston-side oil chamber S1 to communicate with a first oil chamber S11 (see FIG. 5) of the damping force generator 40 to be described later.

A plurality of oil holes 103 is formed in the lower end 20b of the inner tube 20 at intervals in a circumferential direction. Due to these oil holes 103, the rod-side oil chamber S2 and the annular passage 101 communicate with each other.

A passage opening 104 that is open in a radial direction is formed in the damper case 15 on the opposite side to the piston rod 13, located above the upper end 21t of the outer tube 21. An extension-side communication path (a second communication path) 105 through which a third oil chamber S13 (see FIG. 5) of the damping force generator 40 to be described later and the annular passage 101 communicate is formed continuously with the passage opening 104.

### (Reservoir)

The reservoir 30 is formed adjacent to the damper case 15 and has a cylindrical form, for example, and a bag-shaped bladder 31 is provided therein. The bladder 31 is formed in a bag form using an elastic member such as rubber and can expand and contract. Gas such as air is filled in the bladder 31. A space on an outer side of the bladder 31 in the reservoir 30 is configured as an oil storage chamber S3 and communicates with a second oil chamber S12 (see FIG. 5) of the damping force generator 40 to be described later through a reservoir communication path 107.

Oil which is fluid is filled in the piston-side oil chamber S1 and the rod-side oil chamber S2 in the above-described cylinder 11, the annular passage 101 between the inner tube 20 and the outer tube 21, the oil storage chamber S3 in the reservoir 30, and the damping force generator 40 to be described later.

### (Damping Force Generator)

FIG. 5 is a cross-sectional view illustrating the damping force generator provided in the damper case.

As illustrated in FIG. 5, the damping force generator 40 is configured so that a damper unit (a damping force generating unit) 41 is detachably attached to a damper housing portion 29 having a bottomed cylindrical form and formed integrally with the damper case 15.

The damper unit 41 generally has a columnar form and mainly includes a holder member 42, an outer cap 43, a main damper 60, and a damping adjustment portion 80.

The holder member 42 integrally has a shaft portion 45 formed in a predetermined length portion closer to one end 42a and having a constant outer diameter, and a large diameter portion 46 formed closer to the other end 42b and having a larger outer diameter than the shaft portion 45. A recess 47 depressed from the other end 42b side toward one end 42a side is formed in the large diameter portion 46. Furthermore, a central hole 48 that is open to one end 42a and the recess 47 is formed in the holder member 42 continuously in the direction of a central axis C of the shaft portion 45.

Moreover, a plurality of holes 46h through which the recess 47 on an inner side in the radial direction communicates with an outer side in the radial direction is formed in the large diameter portion 46 at intervals in the circumferential direction.

The outer cap 43 has a ring form and is screwed and attached to the outer circumferential surface of the large diameter portion 46. The outer cap 43 is provided so as to close an opening 29a of the damper housing portion 29, and movement of the outer cap 43 in a direction of falling off from the damper housing portion 29 is restricted by a C-ring 49 attached to an inner circumferential surface of the opening 29a.

In the main damper 60, a compression-side outlet check valve 61, an extension-side piston 62, an extension-side damping valve (a second valve) 63, an intermediate member 64, a compression-side damping valve (a first valve) 65, a compression-side piston 66, an extension-side outlet check valve 67, and a stopper plate 68 are sequentially arranged from a side of the large diameter portion 46 of the holder member 42 to a side of one end 42a. The compression-side outlet check valve 61, the extension-side piston 62, the extension-side damping valve 63, the intermediate member 64, the compression-side damping valve 65, the compression-side piston 66, the extension-side outlet check valve 67, and the stopper plate 68 are formed in a ring form, and the shaft portion 45 of the holder member 42 is inserted through the central portion of these components.

A plurality of extension-side inlet ports (extension-side ports, second ports) 62t and a plurality of compression-side outlet ports 62c are alternately formed in the extension-side piston 62 along the circumferential direction. The extension-side inlet port 62t and the compression-side outlet port 62c are formed so as to pass through the extension-side piston 62 in the direction of the central axis C.

The extension-side damping valve 63 is provided so as to block an outlet of the extension-side inlet port 62t facing the intermediate member 64. The extension-side damping valve 63 is formed by stacking a plurality of disc valves.

The compression-side outlet check valve 61 is formed of a disc valve and is provided so as to block an outlet of the compression-side outlet port 62c facing the large diameter portion 46.

A plurality of compression-side inlet ports (compression-side ports, first ports) 66c and a plurality of extension-side outlet ports 66t are alternately formed in the compression-side piston 66 along the circumferential direction. The compression-side inlet port 66c and the extension-side outlet port 66t are formed so as to pass through the compression-side piston 66 in the direction of the central axis C.

The compression-side damping valve 65 is provided so as to block an outlet of the compression-side inlet port 66c on the same side as the intermediate member 64. The compression-side damping valve 65 is formed by stacking a plurality of disc valves.

The extension-side outlet check valve 67 is formed of a disc valve and is provided so as to block an outlet of the extension-side outlet port 66t facing the stopper plate 68.

The intermediate member 64 is disposed between the extension-side damping valve 63 and the compression-side damping valve 65. A plurality of passages 64h through which an inner side in the radial direction communicates with an outer side in the radial direction is formed in the intermediate member 64 continuously in the radial direction at intervals in the circumferential direction. A passage 70 extending from the central hole 48 outwards in the radial direction is formed in the shaft portion 45 of the holder member 42 at a position communicating with the respective passages 64h of the intermediate member 64.

The extension-side damping valve 63 and the compression-side damping valve 65 are configured to block the compression-side inlet port 66c and the extension-side inlet port 62t to block the flow of the oil at normal time. The extension-side damping valve 63 and the compression-side damping valve 65 are bent according to a pressure of the oil passing through the compression-side inlet port 66c and the extension-side inlet port 62t and generate damping force when the oil passes through a gap between the compression-side inlet port 66c and the extension-side inlet port 62t. The damping force generated by the extension-side damping valve 63 and the compression-side damping valve 65 is adjusted by adjusting the number of the respective disc valves.

The compression-side outlet check valve 61 and the extension-side outlet check valve 67 block the flow of the oil by blocking the compression-side outlet port 62c and the extension-side outlet port 66t at the normal time and are bent according to the pressure of the oil passing through the compression-side outlet port 62c and the extension-side outlet port 66t to circulate oil.

The stopper plate 68 is disposed on a side of one end 42a of the shaft portion 45 of the holder member 42 in relation to the extension-side outlet check valve 67.

A nut member 69 is screwed to a screw groove 45n formed at one end 42a of the shaft portion 45, and the compression-side outlet check valve 61, the extension-side piston 62, the extension-side damping valve 63, the intermediate member 64, the compression-side damping valve 65, the compression-side piston 66, the extension-side outlet check valve 67, and the stopper plate 68 are sandwiched between the nut member 69 and the large diameter portion 46 of the holder member 42.

The damping adjustment portion 80 includes a compression-side adjustment valve 81, a compression-side adjuster 82, an extension-side adjustment valve 83, and an extension-side adjuster 84.

The compression-side adjustment valve 81 has a distal end portion (one end 42a side) inserted into the central hole 48 from the recess 47 formed in the large diameter portion 46 of the holder member 42, and has a base end portion (the other end 42b side) coupled with a disc-shaped end piece 81b within the recess 47.

The compression-side adjustment valve 81 has an outer diameter smaller than the inner diameter of the central hole 48. Due to this, a gap passage 85 is formed between an inner circumferential surface of the central hole 48 and an outer circumferential surface of the compression-side adjustment valve 81. Moreover, the compression-side adjustment valve 81 has a valve portion 81v which is provided at the distal end portion and of which an outer diameter decreases gradually toward a distal end. A throttle portion 71 of which an inner diameter is narrowed is formed in the central hole 48 closer to one end 42a of the holder member 42 than the passage 70, and the valve portion 81v is inserted into the throttle portion 71.

The compression-side adjuster 82 is held on an inner cap 87 attached to an inner side of the outer cap 43 so as to be rotatable around the central axis thereof. The compression-side adjuster 82 extends into the recess 47 and is screwed into the end piece 81b. A base portion 82a of the compression-side adjuster 82 is exposed to an outside from the inner cap 87. In this way, when the compression-side adjuster 82 is rotated from an outer side of the damper case 15, the end piece 81b advances and retracts in the direction of the central axis C along the compression-side adjuster 82. By doing so, the valve portion 81v of the compression-side adjustment valve 81 advances and retracts in relation to the throttle portion 71 to increase and decrease the gap between the throttle portion 71 and the valve portion 81v.

The extension-side adjustment valve 83 includes a cylindrical valve portion 83v which is provided in the recess 47 so as to extend toward an opening of the central hole 48 which faces the recess 47. The valve portion 83v is integrated with the extension-side adjustment valve 83. The compression-side adjustment valve 81 is inserted into the extension-side adjustment valve 83.

The extension-side adjuster 84 is held on the inner cap 87 attached to the inner side of the outer cap 43 so as to be rotatable around the central axis thereof. The extension-side adjuster 84 extends into the recess 47 and is screwed into the extension-side adjustment valve 83. A base portion 84a of the extension-side adjuster 84 is exposed to the outside from the inner cap 87. In this way, when the extension-side adjuster 84 is rotated from the outer side of the damper case 15, the extension-side adjustment valve 83 advances and retracts in the direction of the central axis C. By doing so, the valve portion 83v of the extension-side adjustment valve 83 advances and retracts in relation to the opening of the central hole 48 to increase and decrease the gap between the valve portion 83v and the gap passage 85.

In the damping force generator 40 having the above-described configuration, a protruding wall 75 that protrudes outwards in the radial direction is formed on the outer circumferential surface of the extension-side piston 62 and the compression-side piston 66 continuously in the circumferential direction. Sealing rings 76A and 76B that abut on an inner circumferential surface of the damper housing portion 29 to seal the space between the extension-side piston 62 and the compression-side piston 66 and the inner circumferential surface of the damper housing portion 29 are provided on an outer circumferential surface of the protruding wall 75.

In the above-described damping force generator 40, an inner space of the damper housing portion 29 is partitioned into the first oil chamber S11, the second oil chamber S12, and the third oil chamber S13 by the sealing ring 76A of the compression-side piston 66 and the sealing ring 76B of the extension-side piston 62.

The first oil chamber S11 is formed closer to one end 42a of the holder member 42 than the sealing ring 76A of the compression-side piston 66 and communicates with the piston-side oil chamber S1 (see FIG. 4) through the compression-side communication path 102.

The second oil chamber S12 is formed between the sealing ring 76A of the compression-side piston 66 and the sealing ring 76B of the extension-side piston 62 and communicates with the oil storage chamber S3 (see FIG. 4) of the reservoir 30 through the reservoir communication path 107.

The third oil chamber S13 is formed between the sealing ring 76B of the extension-side piston 62 and the outer cap 43 and communicates with the annular passage 101 (see FIG. 4) of the cylinder 11 through the extension-side communication path 105.

The central hole 48 formed in the holder member 42 is open to an inner space of the first oil chamber S11 at one end 42a of the holder member 42.

The passages 64h formed in the intermediate member 64 are open to an inner space of the second oil chamber S12.

Moreover, the holes 46h formed in the large diameter portion 46 of the holder member 42 are open to an inner space of the third oil chamber S13.

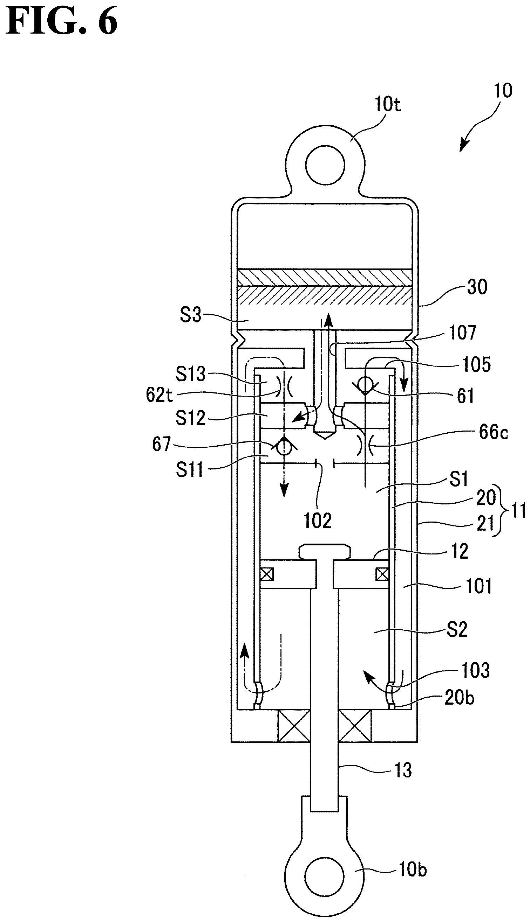

FIG. 6 is a diagram schematically illustrating the configuration of the shock absorber described above.

### (Compression-side Stroke)

As illustrated in FIGS. 5 and 6, in a compression-side stroke in which the piston 12 moves toward the vehicle body in the cylinder 11, the oil in the piston-side oil chamber S1 is compressed by the piston 12. As a result, the oil in the piston-side oil chamber S1 is delivered into the first oil chamber S11 from the compression-side communication path 102 formed in the damper case 15.

The oil delivered to the first oil chamber S11 flows into the compression-side inlet port 66c formed in the compression-side piston 66 of the main damper 60 to push and open the compression-side damping valve 65 provided on an outlet side of the compression-side inlet port 66c and flows toward the second oil chamber S12. In this case, the oil pushes and opens the compression-side damping valve 65 to pass through a gap between the compression-side damping valve 65 and an outlet of the compression-side inlet port 66c whereby the damping force is generated.

A portion of the oil delivered to the first oil chamber S11 flows into the central hole 48 open to one end 42a of the holder member 42 to pass through a gap between the throttle portion 71 and the valve portion 81v of the compression-side adjustment valve 81 and flows into the second oil chamber S12 through the passage 70 formed in the shaft portion 45 and the passages 64h formed in the intermediate member 64. In this case, when the portion of the oil passes through the gap between the throttle portion 71 and the valve portion 81v of the compression-side adjustment valve 81, the damping force is generated. Moreover, by allowing the compression-side adjustment valve 81 to advance and retract with the aid of the compression-side adjuster 82 to adjust the gap between the throttle portion 71 and the valve portion 81v of the compression-side adjustment valve 81, it is possible to adjust the damping force generated when the oil passes through the gap between the throttle portion 71 and the valve portion 81v of the compression-side adjustment valve 81.

A portion of the oil flowing into the second oil chamber S12 flows into the oil storage chamber S3 through the reservoir communication path 107 formed in the damper case 15 in order to compensate for a change in volume of the piston rod 13 in the cylinder 11 according to movement of the piston 12. Moreover, a remaining portion of the oil flowing into the second oil chamber S12 flows into the compression-side outlet port 62c of the extension-side piston 62 to push and open the compression-side outlet check valve 61 and flows into the third oil chamber S13.

The oil flowing into the third oil chamber S13 flows into the rod-side oil chamber S2 through the extension-side communication path 105, the annular passage 101 of the cylinder 11, and the plurality of oil holes 103.

### (Extension-side Stroke)

In an extension-side stroke in which the piston 12 moves toward the wheel in the cylinder 11 according to upward and downward movement of the wheel, the oil in the rod-side oil chamber S2 is compressed by the piston 12. As a result, the oil in the rod-side oil chamber S2 flows toward the cylindrical annular passage 101 formed between the inner tube 20 and the outer tube 21 through the oil hole 103 formed in the lower end of the inner tube 20. The oil flowing through the annular passage 101 is delivered toward the third oil chamber S13 of the damping force generator 40 through the passage opening 104 and the extension-side communication path 105 formed in the damper case 15.

The oil delivered to the third oil chamber S13 flows into the extension-side inlet port 62t of the extension-side piston 62 to push and open the extension-side damping valve 63 provided on an outlet side of the extension-side inlet port 62t whereby the damping force is generated. The oil having passed through a gap between the extension-side inlet port 62t and the extension-side damping valve 63 flows toward the second oil chamber S12.

A portion of the oil delivered to the third oil chamber S13 flows into the recess 47 from the holes 46h formed in the large diameter portion 46 of the holder member 42. Moreover, the oil passes through the gap between the gap passage 85 and the valve portion 83v of the extension-side adjustment valve 83 and flows into the second oil chamber S12 through the gap passage 85, the passage 70 formed in the shaft portion 45, and the passages 64h formed in the intermediate member 64. In this case, when the portion of the oil passes through the gap between the gap passage 85 and the valve portion 83v of the extension-side adjustment valve 83, the damping force is generated. Moreover, by allowing the extension-side adjustment valve 83 to advance and retract with the aid of the extension-side adjuster 84 to adjust the gap between the gap passage 85 and the valve portion 83v of the extension-side adjustment valve 83, it is possible to adjust the damping force generated when the oil passes through the gap.

The oil flows from the oil storage chamber S3 into the second oil chamber S12 through the reservoir communication path 107 formed in the damper case 15 in order to compensate for the change in the volume of the piston rod 13 in the cylinder 11 according to the movement of the piston 12.

The oil having flowed into the second oil chamber S12 passes through the extension-side outlet port 66t of the compression-side piston 66 to push and open the extension-side outlet check valve 67 and flows into the first oil chamber S11.

The oil in the first oil chamber S 11 is delivered to the piston-side oil chamber S1 through the compression-side communication path 102 formed in the damper case 15.

In the shock absorber 10 of the present embodiment, by positioning the upper end 21t of the outer tube 21 closer to the side on which the piston rod 13 is disposed than the upper end 20t of the inner tube 20, it is possible to form the passage opening 104 that communicates with the extension-side communication path 105 in the damper case 15 on an opposite side to the piston rod 13 in relation to the upper end 21t of the outer tube 21 so as to have a large opening area without incurring time-consuming processing. In other words, by adjusting positional relation between the upper end 20t of the inner tube 20 and the upper end 21t of the outer tube 21 using the damper case 15 (and the outer tube holding portion 16), it is possible to form the passage opening 104 having a desired opening area. Therefore, it is possible to suppress an increase in the passage resistance of the passage opening 104 even when the oil flows at a high flow speed. Therefore, it is possible to prevent generation of the damping force in a portion other than a portion between the compression-side inlet port 66c and the compression-side damping valve 65 and a portion between the extension-side inlet port 62t and the extension-side damping valve 63, in which the damping force is to be generated by nature, and to reliably exhibit an original damping performance even when the oil flows at the high flow speed.

By forming the outer tube 21 and the inner tube 20 using a cold-worked material, it is possible to ensure necessary strength while decreasing thickness of the outer tube 21 and the inner tube 20. As a result, it is possible to easily ensure a larger inner diameter of the inner tube 20 and a larger width of the annular passage 101 formed in the gap between the outer tube 21 and the inner tube 20.

By forming the damper case 15 using a cold-worked material formed by forging or the like, it is possible to reduce weight while providing necessary strength.

The damper unit 41 includes the compression-side inlet port 66c into which oil flows when the piston 12 slides to the compression side and which thus generates the damping force, the extension-side inlet port 62t into which oil flows when the piston 12 slides to the extension side and which thus generates the damping force, and the reservoir communication path 107 provided on a downstream side of the compression-side damping valve 65 of the compression-side inlet port 66c and the extension-side damping valve 63 of the extension-side inlet port 62t so as to communicate with the reservoir 30.

According to such a configuration, an amount of oil in the cylinder 11 is compensated by exchange with the oil storage chamber S3 according to advancement volume of the piston rod 13 into the cylinder 11. Since a pressure of the rod-side oil chamber S2 in the cylinder 11 substantially depends on a pressure of the oil storage chamber S3 alone and the pressure of the rod-side oil chamber S2 does not increase immediately when the compression-side stroke transitions to the extension-side stroke, it is possible to avoid a phenomenon called "delay of damping force" that necessary damping force is not generated properly.

### (Other Embodiments)

The shock absorber of the present invention is not limited to the embodiment described above with reference to the drawings, and various modifications are conceivable within a technical scope thereof.

For example, the configuration of the damping adjustment portion 80 provided in the damping force generator 40 is not particularly limited, and the damping adjustment portion 80 may be omitted.

The entire configuration of the shock absorber 10 can be changed appropriately. For example, in the embodiment, although the downstream side of the compression-side damping valve 65 of the compression-side inlet port 66c and the extension-side damping valve 63 of the extension-side inlet port 62t communicates with the reservoir 30 through the reservoir communication path 107, the present invention is not limited to this. For example, the reservoir 30 itself may not be provided.

Beside this, the configurations described in the embodiment may be selected appropriately or changed to another configuration without departing from the present invention as defined by the claims.

## Claims

1. A shock absorber (10) comprising:
a cylinder (11) which has an outer tube (21) and an inner tube (20) provided on an inner side of the outer tube (21) with a gap formed therebetween in a radial direction, and in which oil is sealed;
a piston rod (13) which has one end inserted into the cylinder (11) and the other end extended outside the cylinder (11);
a piston (12) which is connected to the one end of the piston rod (13), which is provided in the inner tube (20) so as to be slidable along a central axis direction of the inner tube (20), and which partitions an inner space of the inner tube (20) into a rod-side oil chamber (S2) on a same side as the piston rod (13) and a piston-side oil chamber (S1) on an opposite side to the piston rod (13);
a damping force generating unit (40) which controls flow of the oil occurring when the piston (12) slides in the inner tube (20) according to displacement of the piston rod (13), to generate damping force; and
a holding member (15) which is provided on an opposite side to the piston rod (13) in relation to the piston (12), and which holds the outer tube (21) and the inner tube (20) in a state in which an end of the outer tube (21) is positioned closer to a side on which the piston rod (13) is disposed than an end of the inner tube (20),
wherein the holding member (15) includes:
a damper housing portion (29) that houses the damping force generating unit (40);
a first communication path (102) through which an inner side of the inner tube (20) and the damper housing portion (29) communicate with each other;
a second communication path (105) through which the gap and the damper housing portion (29) communicate with each other; and
a passage opening (104) which is formed on an opposite side to the piston rod (13) in relation to the end of the outer tube (21), and through which the second communication path (105) and the gap communicate with each other
wherein
a cylindrical outer tube holding portion (16) extending toward the cylinder is provided in the holding member (15), and the outer tube (21) is held in a state in which an upper end (21t) of the outer tube (21) is inserted into the outer tube holding portion (16); and
an inner tube holding recess (18) is formed in the holding member (15), and the inner tube (20) is held in a state in which an upper end (20t) of the inner tube (20) is inserted into the inner tube holding recess (18)
wherein the damping force generating unit (40) includes:
a first port (66c) into which the oil flows from the first communication path (102) when the piston (12) slides inside the cylinder (11);
a first valve (65) provided so as to block an end of the first port (66c) and open and close the first port (66c) by elastically deforming according to a pressure of the oil flowing into the first port (66c);
a second port (62t) into which the oil flows from the second communication path (105) when the piston (12) slides inside the cylinder (11);
a second valve (63) provided so as to block an end of the second port (62t) and open and close the second port (62t) by elastically deforming according to a pressure of the oil flowing into the second port (62t);
**characterized in that**
the first valve (65) and the second valve (63) are stacked on top of each other in a longitudinal direction of the damping force generating unit (40).

2. The shock absorber (10) according to claim 1,
wherein the first communication path (102) is a compression-side communication path through which the oil flows from the piston-side oil chamber (S1) to the damper housing portion (29) when the piston (12) slides to a compression side in the cylinder (11), and
wherein the second communication path (105) is an extension-side communication path through which the oil flows from the rod-side oil chamber (S2) to the damper housing portion (29) through the gap when the piston (12) slides to an extension side in the cylinder (11).

3. The shock absorber (10) according to claim 1 or 2, further comprising:
a reservoir (30) that compensates the oil according to a change in advancement volume of the piston rod (13) into the cylinder (11), and
a communication path (107) provided on a downstream side of the first valve (65) and the second valve (63) so as to communicate with the reservoir (30).

4. The shock absorber (10) according to any one of claims 1 to 3,
wherein the first port (66c) is a compression-side port into which the oil flows from the first communication path (102) when the piston (12) slides to a compression side in the cylinder (11), and
wherein the first valve (65) is a compression-side damping valve provided so as to block an end of the compression-side port and open and close the compression-side port by elastically deforming according to a pressure of the oil flowing into the compression-side port.

5. The shock absorber (10) according to any one of claims 1 to 4,
wherein the second port (62t) is an extension-side port into which the oil flows from the second communication path (105) when the piston (12) slides to an extension side in the cylinder (11), and
wherein the second valve (63) is an extension-side damping valve provided so as to block an end of the extension-side port and open and close the extension-side port by elastically deforming according to a pressure of the oil flowing into the extension-side port.

6. The shock absorber (10) according to any one of claims 1 to 5,
wherein the outer tube (21) and the inner tube (20) are formed of a cold-worked material.

7. The shock absorber (10) according to any one of claims 1 to 6,
wherein the holding member (15) is formed of a cold-worked material.

## Patentansprüche

1. Stoßdämpfer (10), der Folgendes umfasst:
einen Zylinder (11), der ein Außenrohr (21) und ein Innenrohr (20), das an einer Innenseite des Außenrohrs (21) mit einem dazwischen in einer radialen Richtung gebildeten Spalt bereitgestellt ist, aufweist und in dem Öl eingeschlossen ist;
eine Kolbenstange (13), von welcher ein Ende in den Zylinder (11) eingesetzt ist und das andere Ende sich außerhalb des Zylinders (11) erstreckt;
einen Kolben (12), der mit dem einen Ende der Kolbenstange (13) verbunden ist, der in dem Innenrohr (20) bereitgestellt ist, um entlang einer Mittelachsrichtung des Innenrohrs (20) gleiten zu können, und der einen Innenraum des Innenrohrs (20) in eine stangenseitige Ölkammer (S2) an einer selben Seite wie die Kolbenstange (13) und eine kolbenseitige Ölkammer an einer entgegengesetzten Seite zur Kolbenstange (13) unterteilt;
eine Dämpfungskrafterzeugungseinheit (40), die den Ölfluss, der auftritt, wenn der Kolben (12) gemäß Verschiebung der Kolbenstange (13) in dem Innenrohr (20) gleitet, steuert, um Dämpfungskraft zu erzeugen; und
ein Halteelement (15), das an einer entgegengesetzten Seite zu der Kolbenstange (13) in Relation zu dem Kolben (12) bereitgestellt ist und das Außenrohr (21) und das Innenrohr (20) in einem Zustand hält, in dem ein Ende des Außenrohrs (21) näher bei einer Seite, auf der die Kolbenstange (13) angeordnet ist, als einem Ende des Innenrohrs (20) positioniert ist,
wobei das Halteelement (15) Folgendes beinhaltet:
einen Dämpfergehäuseabschnitt (29), der die Dämpfungskrafterzeugungseinheit (40) beherbergt;
einen ersten Kommunikationspfad (102), durch den eine Innenseite des Innenrohrs (20) und der Dämpfergehäuseabschnitt (29) miteinander kommunizieren;
einen zweiten Kommunikationspfad (105), durch den der Spalt und der Dämpfergehäuseabschnitt (29) miteinander kommunizieren; und
eine Durchlassöffnung (104), die an einer entgegengesetzten Seite zu der Kolbenstange (13) in Relation zu dem Ende des Außenrohrs (21) ausgebildet ist und durch die der zweite Kommunikationspfad (105) und der Spalt miteinander kommunizieren,
wobei
ein zylindrischer Außenrohrhalteabschnitt (16), der sich zu dem Zylinder erstreckt, in dem Halteelement (15) bereitgestellt ist, und das Außenrohr (21) in einem Zustand gehalten ist, in dem ein oberes Ende (21t) des Außenrohrs (21) in den Außenrohrhalteabschnitt (16) eingesetzt ist; und
eine Innenrohrhaltevertiefung (18) in dem Halteelement (15) ausgebildet ist und das Innenrohr (20) in einem Zustand gehalten ist, in dem ein oberes Ende (20t) des Innenrohrs (20) in die Innenrohrhaltevertiefung (18) eingesetzt ist,
wobei die Dämpfungskrafterzeugungseinheit (40) Folgendes beinhaltet:
einen ersten Anschluss (66c), in den das Öl von dem ersten Kommunikationspfad (102) fließt, wenn der Kolben (12) innerhalb des Zylinders (11) gleitet;
ein erstes Ventil (65), das bereitgestellt ist, um ein Ende des ersten Anschlusses (66c) zu blockieren und den ersten Anschluss (66c) zu öffnen und zu schließen, indem es sich gemäß einem Druck des Öls, das in den ersten Anschluss (66c) fließt, elastisch verformt;
einen zweiten Anschluss (62t), in den das Öl von dem zweiten Kommunikationspfad (105) fließt, wenn der Kolben (12) innerhalb des Zylinders (11) gleitet;
ein zweites Ventil (63), das bereitgestellt ist, um ein Ende des zweiten Anschlusses (62t) zu blockieren und den zweiten Anschluss (62t) zu öffnen und zu schließen, indem es sich gemäß einem Druck des Öls, das in den zweiten Anschluss (62t) fließt, elastisch verformt;
**dadurch gekennzeichnet, dass**
das erste Ventil (65) und das zweite Ventil (63) in einer Längsrichtung der Dämpfungskrafterzeugungseinheit (40) aufeinandergestapelt sind.

2. Stoßdämpfer (10) nach Anspruch 1,
wobei der erste Kommunikationspfad (102) ein kompressionsseitiger Kommunikationspfad ist, durch den das Öl von der kolbenseitigen Kammer zu dem Dämpfergehäuseabschnitt (29) fließt, wenn der Kolben (12) zu einer Kompressionsseite in dem Zylinder (11) gleitet, und
wobei der zweite Kommunikationspfad (105) ein extensionsseitiger Kommunikationspfad ist, durch den das Öl von der stangenseitigen Ölkammer (S2) zum Dämpfergehäuseabschnitt (29) durch den Spalt fließt, wenn der Kolben (12) zu einer Extensionsseite in dem Zylinder (11) gleitet.

3. Stoßdämpfer (10) nach Anspruch 1 oder 2, der weiter Folgendes umfasst:
ein Reservoir (30), das das Öl gemäß einer Veränderung im Fördervolumen der Kolbenstange (13) in dem Zylinder (11) ausgleicht, und
einen Kommunikationspfad (107), der an einer stromabwärtigen Seite des ersten Ventils (65) und des zweiten Ventils (63) bereitgestellt ist, um mit dem Reservoir (30) zu kommunizieren.

4. Stoßdämpfer (10) nach einem der Ansprüche 1 bis 3,
wobei der erste Anschluss (66c) ein kompressionsseitiger Anschluss ist, in den das Öl von dem ersten Kommunikationspfad (102) fließt, wenn der Kolben (12) zu einer Kompressionsseite in dem Zylinder (11) gleitet, und
wobei das erste Ventil (65) ein kompressionsseitiges Dämpfungsventil ist, das bereitgestellt ist, um ein Ende des kompressionsseitigen Anschlusses zu blockieren und den kompressionsseitigen Anschluss zu öffnen und zu schließen, indem es sich gemäß einem Druck des Öls, das in den kompressionsseitigen Anschluss fließt, elastisch verformt.

5. Stoßdämpfer (10) nach einem der Ansprüche 1 bis 4,
wobei der zweite Anschluss (62t) ein extensionsseitiger Anschluss ist, in den das Öl von dem zweiten Kommunikationspfad (105) fließt, wenn der Kolben (12) zu einer Extensionsseite in dem Zylinder (11) gleitet, und
wobei das zweite Ventil (63) ein extensionsseitiges Dämpfungsventil ist, das bereitgestellt ist, um ein Ende des extensionsseitigen Anschlusses zu blockieren und den extensionsseitigen Anschluss zu öffnen und zu schließen, indem es sich gemäß einem Druck des Öls, das in den extensionsseitigen Anschluss fließt, elastisch verformt.

6. Stoßdämpfer (10) nach einem der Ansprüche 1 bis 5,
wobei das Außenrohr (21) und das Innenrohr (20) aus einem kaltverformten Material gebildet sind.

7. Stoßdämpfer (10) nach einem der Ansprüche 1 bis 6,
wobei das Halteelement (15) aus einem kaltverformten Material gebildet ist.

## Revendications

1. Absorbeur de chocs (10) comprenant :
un cylindre (11) qui présente un tube extérieur (21) et un tube intérieur (20) prévu sur un côté intérieur du tube extérieur (21) avec un interstice formé entre ceux-ci dans une direction radiale, et dans lequel de l'huile est enfermée hermétiquement ;
une tige de piston (13) qui présente une extrémité insérée dans le cylindre (11) et l'autre extrémité étendue à l'extérieur du cylindre (11) ;
un piston (12) qui est relié à la une extrémité de la tige de piston (13), qui est prévu dans le tube intérieur (20) de façon à pouvoir glisser le long d'une direction d'axe central du tube intérieur (20), et qui sépare un espace intérieur du tube intérieur (20) en une chambre d'huile côté tige (S2) sur un même côté que la tige de piston (13) et une chambre d'huile côté piston (S1) sur un côté opposé à la tige de piston (13) ;
une unité de génération de force d'amortissement (40) qui commande un écoulement de l'huile se produisant lorsque le piston (12) glisse dans le tube intérieur (20) selon un déplacement de la tige de piston (13), pour générer une force d'amortissement ; et
un élément de maintien (15) qui est prévu sur un côté opposé à la tige de piston (13) par rapport au piston (12), et qui maintient le tube extérieur (21) et le tube intérieur (20) dans un état dans lequel une extrémité du tube extérieur (21) est positionnée plus près d'un côté sur lequel la tige de piston (13) est disposée qu'une extrémité du tube intérieur (20),
dans lequel l'élément de maintien (15) inclut :
une portion abritant un amortisseur (29) qui abrite l'unité de génération de force d'amortissement (40) ;
un premier chemin de communication (102) à travers lequel un côté intérieur du tube intérieur (20) et la portion abritant un amortisseur (29) communiquent l'un avec l'autre ;
un second chemin de communication (105) à travers lequel l'interstice et la portion abritant un amortisseur (29) communiquent l'un avec l'autre ; et
une ouverture de passage (104) qui est formée sur un côté opposé à la tige de piston (13) par rapport à l'extrémité du tube extérieur (21), et à travers laquelle le second chemin de communication (105) et l'interstice communiquent l'un avec l'autre
dans lequel
une portion de maintien de tube extérieur cylindrique (16) s'étendant vers le cylindre est prévue dans l'élément de maintien (15), et le tube extérieur (21) est maintenu dans un état dans lequel une extrémité supérieure (21t) du tube extérieur (21) est insérée dans la portion de maintien de tube extérieur (16) ; et
un évidement de maintien de tube intérieur (18) est formé dans l'élément de maintien (15), et le tube intérieur (20) est maintenu dans un état dans lequel une extrémité supérieure (20t) du tube intérieur (20) est insérée dans l'évidement de maintien de tube intérieur (18)
dans lequel l'unité de génération de force d'amortissement (40) inclut :
un premier orifice (66c) dans lequel l'huile s'écoule à partir du premier chemin de communication (102) lorsque le piston (12) glisse à l'intérieur du cylindre (11) ;
une première soupape (65) prévue de façon à bloquer une extrémité du premier orifice (66c) et ouvrir et fermer le premier orifice (66c) en se déformant élastiquement selon une pression de l'huile s'écoulant dans le premier orifice (66c) ;
un second orifice (62t) dans lequel l'huile s'écoule à partir du second chemin de communication (105) lorsque le piston (12) glisse à l'intérieur du cylindre (11) ;
une seconde soupape (63) prévue de façon à bloquer une extrémité du second orifice (62t) et ouvrir et fermer le second orifice (62t) en se déformant élastiquement selon une pression de l'huile s'écoulant dans le second orifice (62t) ;
**caractérisé en ce que**
la première soupape (65) et la seconde soupape (63) sont empilées l'une sur l'autre dans une direction longitudinale de l'unité de génération de force d'amortissement (40).

2. Absorbeur de chocs (10) selon la revendication 1,
dans lequel le premier chemin de communication (102) est un chemin de communication côté compression à travers lequel l'huile s'écoule à partir de la chambre d'huile côté piston (S1) jusqu'à la portion
abritant un amortisseur (29) lorsque le piston (12) glisse vers un côté compression dans le cylindre (11), et
dans lequel le second chemin de communication (105) est un chemin de communication côté extension à travers lequel l'huile s'écoule à partir de la chambre d'huile côté tige (S2) jusqu'à la portion abritant un amortisseur (29) à travers l'interstice lorsque le piston (12) glisse vers un côté extension dans le cylindre (11).

3. Absorbeur de chocs (10) selon la revendication 1 ou 2, comprenant en outre :
un réservoir (30) qui compense l'huile selon un changement de volume d'avancée de la tige de piston (13) dans le cylindre (11), et
un chemin de communication (107) prévu sur un côté en aval de la première soupape (65) et de la seconde soupape (63) de façon à communiquer avec le réservoir (30).

4. Absorbeur de chocs (10) selon l'une quelconque des revendications 1 à 3,
dans lequel le premier orifice (66c) est un orifice côté compression dans lequel l'huile s'écoule à partir du premier chemin de communication (102) lorsque le piston (12) glisse vers un côté compression dans le cylindre (11), et
dans lequel la première soupape (65) est une soupape d'amortissement côté compression prévue de façon à bloquer une extrémité de l'orifice côté compression et ouvrir et fermer l'orifice côté compression en se déformant élastiquement selon une pression de l'huile s'écoulant dans l'orifice côté compression.

5. Absorbeur de chocs (10) selon l'une quelconque des revendications 1 à 4,
dans lequel le second orifice (62t) est un orifice côté extension dans lequel l'huile s'écoule à partir du second chemin de communication (105) lorsque le piston (12) glisse vers un côté extension dans le cylindre (11), et
dans lequel la seconde soupape (63) est une soupape d'amortissement côté extension prévue de façon à bloquer une extrémité de l'orifice côté extension et ouvrir et fermer l'orifice côté extension en se déformant élastiquement selon une pression de l'huile s'écoulant dans l'orifice côté extension.

6. Absorbeur de chocs (10) selon l'une quelconque des revendications 1 à 5,
dans lequel le tube extérieur (21) et le tube intérieur (20) sont constitués d'un matériau écroui.

7. Absorbeur de chocs (10) selon l'une quelconque des revendications 1 à 6,
dans lequel l'élément de maintien (15) est constitué d'un matériau écroui.
